# EUROPÄISCHE PATENTSCHRIFT

(11) **EP 1 982 060 B1**
(45) Veröffentlichungstag und Bekanntmachung des Hinweises auf die Patenterteilung: **05.05.2010**
(21) Anmeldenummer: 07703184.7
(22) Anmeldetag: 01.02.2007
(51) Int. Cl.: F02B 77/11, B32B 3/12, B32B 3/28, F01N 13/14, F16L 59/08

(54) **SCHALLABSORBIERENDES ISOLATIONSTEIL MIT VERFESTIGUNGSPRÄGUNGEN**
SOUND-ABSORBING INSULATION PART HAVING HARDENING EMBOSSINGS
ELEMENT ISOLANT ABSORBANT LE BRUIT ET DOTE DE MOULURES DE RENFORT

(30) Priorität: 02.02.2006 DE 202006001654 U
(43) Veröffentlichungstag der Anmeldung: 22.10.2008
(73) Patentinhaber: Rieter Technologies A.G., 8406 Winterthur (CH)
(72) Erfinder: WILDHABER, Alexander, CH-9475 Sevelen (CH)
(74) Vertreter: Van Adrichem Geisseler, Johanna
(86) Internationale Anmeldenummer: PCT/EP2007/000849
(87) Internationale Veröffentlichungsnummer: WO 2007/088048

(56) Entgegenhaltungen:
- EP-A1- 0 439 432
- WO-A-91/10560
- US-A- 2 969 586
- US-A- 4 092 842

## Beschreibung

Die vorliegende Erfindung betrifft ein schallabsorbierendes Isolationsteil gemäss Oberbegriff des Anspruchs 1.

Derartige Isolationsteite finden überall dort ihre Anwendung, wo Schall- und/oder Wärmequellen abgeschirmt werden müssen. Vorzugsweise werden sie im Automobilbau eingesetzt und werden dort beispielsweise zwischen dem heiss werdenden Katalysator und dem Fahrzeugboden angebracht.

Derartige Isolationsteile sind bekannt und beispielsweise in den Anmeldungen WO 91/10560, WO 00/46493 oder in der DE 10 2005 006 164 A1 beschrieben.

Die WO 91/10560 beschreibt ein Hitzeschild mit einem Folienpaket, welches wärmeleitende Zonen, so genannte Wärmesenken, und wärmeisolierende Zonen umfasst. Insbesondere weisen die einzelnen Folien des Folienpakets Noppen auf, die dazu führen, dass die gestapelten Folien voneinander beabstandet sind. Die einzelnen Folien können hermetisch dicht miteinander verbunden sein, womit der Einschluss eines Gases, z.B. Xenon, ermöglicht wird. In einer Weiterbildung dieses bekannten Hitzeschildes sind, zur Verbesserung der akustischen Wirksamkeit, die einzelnen Folien perforiert. Die Randbereiche dieser Folienpakete werden in der Praxis ohne wesentliche Druckkraft zusammengedrückt, geschnitten und anschliessend gebördelt, heissversiegelt oder mechanisch verbunden.

Es hat sich gezeigt, dass die akustische Wirksamkeit solcher Folienpakete wesentlich verbessert werden kann, wenn sie schlitzförmige Perforationen aufweisen. Die WO 00/46493 beschreibt ein Isolationsteil, bestehend aus mindestens zwei metallischen Blättern, seien es Folien oder dünne Bleche. Zwecks Verbesserung der akustischen Wirksamkeit weist mindestens eines dieser metallischen Blätter Noppen und Fissuren auf. Diese Fissuren bilden sich, wenn beim Noppen des mindestens einen metallischen Blattes die Elastizitätsgrenze überschritten wird. In einer bevorzugten Ausführungsform sind die einzelnen metallischen Blätter miteinander kaltverschweisst.

Um die Kosten für derartige Isolationsteile zu senken, geht die Entwicklung dahin, die schall- und hitzeisolierenden Folien mit ihrer Trägerstruktur zu vereinen/integrieren, um ein selbsttragendes Isolationsteil zu schaffen. Ein solches Isolationsteil hat nicht nur den Vorteil der Kostenersparnis; es ist insgesamt auch leichter und kann je nach Erfordernis auch weniger Bauraum in Anspruch nehmen.

Die DE 10 2005 006 164 offenbart ein derartiges Isolationsteil in Form einer genoppten Folie oder eines genoppten Bleches mit schlitzförmigen Öffnungen, welche im wesentlichen glatte Kanten und glatte Ende aufweisen. Die Öffnungen werden gebildet, indem in einem ersten Schritt am Rohmaterial mittels einer Schlitzprägemaschine, beispielsweise ein Segmentschlitzapparat, Materialeinschnürungen bzw. Sollbruchstellen eingeprägt werden. Das derart vorbehandelte Material wird dann in einem nächsten Schritt einer dreidimensionalen Verformung durch Noppung unterzogen, wobei die Sollbruchstellen aufplatzen und die vorgenannten schlitzförmigen Öffnungen mit glatten Kanten und glatten Enden entstehen. Leider hat sich gezeigt, dass derartige Teile gegenüber dem Stand der Technik ein geringeres Schallabsorptionsvermögen aufweisen.

Zudem sind derartige Isolationsteile während des bestimmungsgemässen Gebrauchs starken Vibrationen und mitunter starker Zugbeanspruchung unterworfen, was zur Folge hat, dass derartige schlitzförmige Öffnungen dazu neigen ein- und/oder weiterzureissen. Ein solches Ein- oder Weiterreissen beeinträchtigt die mechanische Festigkeit und die vorgesehene Schallabsorption. Um ein Ein- oder Weiterreissen zu verhindern, wird in derselben DE 10 2005 006 164 vorgeschlagen, die Schlitze in eine Schlitzerweiterung, d.h. in kreisrunde oder elliptische Löcher an beiden Enden der Schlitze münden zu lassen. Dies bedingt jedoch eine entsprechende Schlitzpräge- und Lochstanzform, was die Herstellung solcher Isolationsteile sehr aufwändig und teuer macht.

Es ist deshalb Aufgabe der vorliegenden Erfindung, ein schallabsorbierendes Isolationsteil zu schaffen, welche die oben genannten Nachteile nicht aufweist und insbesondere ein selbsttragendes und leichtgewichtiges Isolationsteil zu schaffen, welches den vorgesehenen mechanischen Beanspruchungen ohne Einbusse des akustischen Absorptionsvermögens langfristig standhält.

Diese Aufgabe wird erfindungsgemäss durch ein schallabsorbierendes Isolationsteil mit den Merkmalen des Anspruchs 1 gelöst, und insbesondere durch ein schallabsorbierendes Hitzeschild, welches mindestens ein blattförmiges Element umfasst, welches genoppt ist und welches mit Prägungen versehen ist, in denen Perforationen angeordnet sein können. Die Prägungen sind als Verfestigungsprägungen ausgebildet, d.h. weisen einen Prägeboden und verdichtete Prägeflanken auf, welche die Eigenstabilität des blattförmigen Elementes erhöhen und gleichzeitig ein Ein- oder Weiterreissen der Perforationen verhindern. Die Perforationen sind als Fissuren ausgebildet. Im Folgenden soll der Begriff Fissuren verwendet werden für Perforationen, welche beim Noppen durch Aufdehnen und Reissen des Prägebodens entstehen und deshalb eine bizarr geformte Kontur aufweisen. Derart durch Aufdehnen entstandene Fissuren weisen eine gewellte und unregelmässige, also bizarre Kontur auf und sind beispielsweise aus WO 00/46493 bekannt. Es hat sich gezeigt, dass Perforationen mit derart geformten unregelmässigen Konturen im Vergleich zu schlitzförmigen Öffnungen mit im wesentlichen glatten Kanten und glatten Enden ein signifikant verbessertes Absorptionsvermögen zeigen.

In einer bevorzugten Ausführungsform weist das erfindungsgemässe Isolationsteil Zonen ohne Verfestigungsprägungen auf. Diese Zonen dienen der stabileren Aufnahme von Befestigungselementen, der Beschriftung mit Artikelnummern oder Markenzeichen oder einfach der Verarbeitung, beispielsweise im Randbereich (Bördelkante) und verhindern Ermüdungserscheinungen an diesen Stellen.

Es versteht sich, dass die Verfestigungsprägungen beliebige Formen aufweisen können, insbesondere rund, trapez- oder sichelförmig, sternförmig, dreieckig, rechteckig und/oder hexagonal sein können. Bevorzugt werden Formen, welche eine grosse Bodenfläche bilden, um ein willkürlich orientiertes Reissen zu begünstigen.

In einer vorteilhaften Ausführungsform weist die erfindungsgemässe Verfestigungsprägung einen Prägeboden auf, welcher an ihrer Schulter, d.h. im Bereich des Prägebodens unmittelbar vor dem Übergang zur Prägeflanke, eine Dicke b aufweist, welche zur Dicke d des blattförmigen Elementes in einem Verhältnis von 1/10 steht. Es versteht sich von selbst, dass dieses Verhältnis auch kleiner als 1/10 sein kann. Dieses Verhältnis erweist sich als besonders vorteilhaft, weil es zu einer optimalen Verfestigung des Materials im Prägebereich führt. Prägungen bei denen die Breite a des Prägebodens zur Dicke b des Prägebodens in einem Verhältnis von mindestens 3/1 stehen, haben sich als besonders vorteilhaft erwiesen.

In einer weiteren Ausführungsform besteht das blattförmige Element aus einem metallischen Material, insbesondere aus Aluminium, aus einer Aluminiumlegierung, aus einem aluminiumbeschichteten Stahl oder aus einem chromlegierten Stahl. Es versteht sich, dass dieses blattförmige Element auch aus einem wärmebeständigen Kunststoff, wie beispielsweise aus einem faserverstärkten Thermoplast oder aus einem Verbundwerkstoff (mit einer ein- oder beidseitigen Beschichtung aus Metall und/oder Fasermaterial in Form von Vliesen, Gelegen, Geweben, Teppichen, Mehrlagenverbundmaterialien, wie sie durch weben oder vernadeln, kalandrieren, verpressen oder durch melt-blow oder wet-lay Verfahren gefertigt werden) gefertigt sein kann, insbesondere aus einem geschäumten Material. Als besonders vorteilhaft hat sich ein Aluminiumblatt mit einer Dicke von 0.1 bis 0.5 mm, insbesondere 0.3 bis 0.5 mm erwiesen.

Es zeigt sich als akustisch besonders relevant, dass die Fissuren nicht in einer bestimmten Richtung liegen, sondern willkürlich, d.h. wahllos angeordnet sind. Diese zufällige Verteilung der Orientierung der Fissuren begünstigt, die Absorption von diffus einfallenden Schallwellen. Es versteht sich jedoch, dass zur lokal unterschiedlichen Verteilung der Orientierung der Fissuren die Verfestigungsprägungen bereichsweise mit unterschiedlicher Orientierungsrichtung eingebracht werden können.

Der oben genannte Erfindungsgegenstand, die Vorteile und Eigenschaften der Erfindung werden im Folgenden anhand der Figuren beispielhaft erläutert oder gehen offensichtlich aus der folgenden Beschreibung der bevorzugten Ausführungsform hervor.

Dabei zeigen:
- Fig. 1: eine schematische Darstellung eines Hitzeschilds in perspektivischer Ansicht;
- Fig. 2: eine schematische Darstellung einer schlitzförmigen Öffnung bekannter Art;
- Fig. 3: eine schematische Darstellung einer einzelnen erfindungsgemässen Verfestigungsprägung in perspektivischer Ansicht;
- Fig. 4: eine schematische Darstellung einer einzelnen erfindungsgemässen Verfestigungsprägung im Querschnitt ohne Fissur;
- Fig. 5: eine schematische Darstellung einer einzelnen erfindungsgemässen Verfestigungsprägung im Querschnitt mit einer Fissur;
- Fig. 6: eine schematische Darstellung eines erfindungsgemässen genoppten Isolationsteils mit Verfestigungsprägungen und Fissuren im Querschnitt.

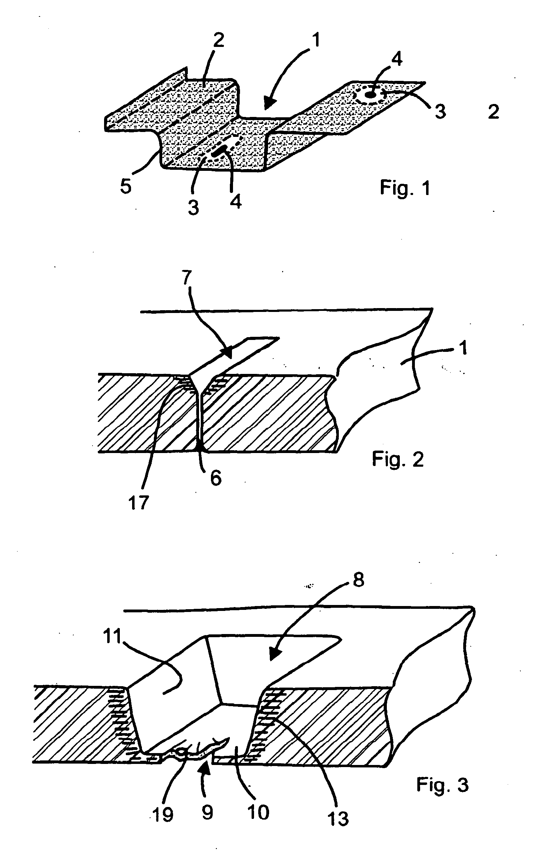

Fig. 1 zeigt ein Hitzeschild in perspektivischer Ansicht mit einer verwendungsgemässen Gestaltung. Dieses Hitzeschild umfasst ein blattförmiges Element 1, im Folgenden auch einfach "Blatt" genannt, mit schlitzförmigen Öffnungen 2, welche über das Blatt 1 verteilt sind. Die Verteilung dieser schlitzförmigen Öffnungen 2 liegt im Bereich des fachmännischen Handelns, insbesondere sind perforationsfreie Zonen 3 möglich, die Befestigungslöcher 4 zur Aufnahme von Befestigungsmitteln aufweisen. Derartige Zonen 3 können auch der Beschriftung oder der sichereren Fertigung dienen. Es liegt im Bereich des fachmännischen Handelns ein solches Blatt 1 auch mit Sicken 5 zu versehen, um dessen mechanische Stabilität weiter zu erhöhen.

Vorzugsweise umfasst das Hitzeschild ein nichtkorrosives Blatt 1, insbesondere aus Aluminium. Vorzugsweise wird ein Aluminiumblech mit einer Dicke von 0.3 bis 0.5 mm verwendet. Selbstverständlich kann das Baltt auch aus einer Aluminiumfolie von beispielsweise 0.1 bis 0.3 mm Dicke oder aus einem dicken Aluminiumblech mit einer Dicke von beispielsweise 0.5 bis 5 mm bestehen. Zur Herstellung eines erfindungsgemässen Blattes 1 können auch andere Metalle verwendet werden, wie beispielsweise Kupfer oder Zink oder geeignete Legierungen. Es können sogar Kunststoffe, wie Thermoplaste, Schäume oder Folien zur Herstellung des erfindungsgemässen Blattes 1 verwendet werden. Dabei spielt es keine Rolle, ob das verwendete Material weich oder spröd ist. Es muss sich lediglich für die Noppung und/oder Umformung eignen.

Fig. 2 zeigt eine schematische Darstellung einer Öffnung bekannter Art. Zur Erzeugung eines Spaltes 6 wird das Material angerissen oder gekerbt und dann gebrochen. Deutlich erkennbar ist eine Kerbung 7, welche üblicherweise eine prismatische Form aufweist. Im Randbereich der Kerbung 7 ist eine gewisse Verdichtung 17 des Materials (an dessen Kristallstruktur) erkennbar. Das Verhältnis zwischen der Kerbentiefe zur Dicke des Materials ist bei den bekannten Öffnungen sehr klein, insbesondere kleiner als 1:2.

Fig. 3 zeigt eine schematische Darstellung einer einzelnen erfindungsgemässen Verfestigungsprägung 8 in perspektivischer Ansicht. Um das erfindungsgemässe blattförmige Element 1 optimal den akustischen Bedürfnissen anzupassen, können auch andere Verfestigungsprägungsformen verwendet werden. Die Verfestigungsprägungsformen können insbesondere eine runde, dreieckige, rechteckige, trapezförmige, hexagonale, sternförmige oder jede andere gewünschte Form haben. Selbstverständlich ist nicht erforderlich, dass die Verfestigungsprägungen 8 sich im Querschnitt nach unten verjüngen, wie beispielsweise in Fig. 3 gezeigt wird. Erfindungsgemäss können auch blattförmige Elemente 1 gefertigt werden, die entweder eine einheitliche Verfestigungsprägungsform oder lokal unterschiedliche Verfestigungsprägungsformen aufweisen. Deutlich erkennbar ist eine Fissur 9 im Prägeboden 10, welche eine bizarre Kontur 19 aufweist.

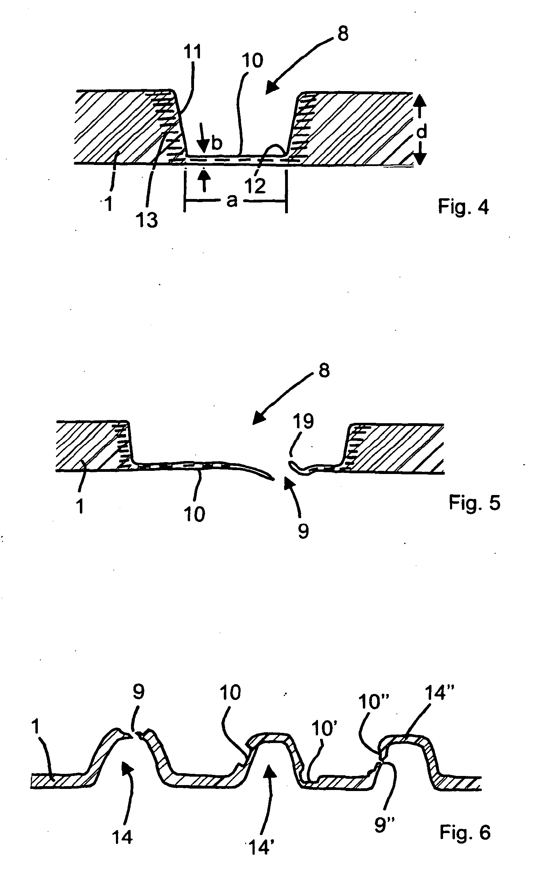

Fig. 4 zeigt eine schematische Darstellung einer einzelnen erfindungsgemässen Verfestigungsprägung 8 im Querschnitt ohne Fissur. Die erfindungsgemässe Verfestigungsprägung 8 weist einen Prägeboden 10 und Seitenflanken 11 auf. Der Prägeboden 10 ist dünner als das blattförmige Element 1, wobei das Verhältnis b/d an der Schulter 12 (Übergang von Seitenflanke 11 zu Prägeboden 10) bevorzugt 1:10 oder weniger beträgt. Bevorzugt beträgt das Verhältnis zwischen der Breite a eines nicht aufgerissenen Prägebodens 10 zur Dicke b des Prägebodens 3:1 oder mehr. Die Verfestigungsprägung 8 weist im Flankenbereich 9 und insbesondere im Prägebodenbereich 10 eine starke lokale Verhärtung bzw. Verfestigung 13 auf. Diese Verfestigungsprägungen tragen zur Versteifung des gesamten Blatts 1 bei.

Fig. 5 zeigt eine schematische Darstellung einer einzelnen erfindungsgemässen Verfestigungsprägung 8 im Querschnitt mit einer Fissur 9 im Prägeboden 10. Wiederum ist die bizarre Kontur 19, welche durch das Aufdehnen und Reissen des Prägebodens 10 entsteht, erkennbar. Diese bizzare Kontur zeigt in aller Regel wellenförmige Verwerfungen und einen unregelmässig gezackten Verlauf.

Fig. 6 zeigt einen Teilquerschnitt durch ein blattförmiges Element 1 mit Noppen 14 und Verfestigungsprägungen. Deutlich erkennbar ist auch, dass nicht alle Prägeböden 10, 10', 10" aufgerissen sind. Einige dieser Prägeböden 10"sind aufgerissen und zeigen Fissuren 9, 9", während andere Prägeböden 10, 10' lediglich aufgedehnt oder verformt sind und keine Fissuren aufweisen.

Die hier offenbarten Fissuren weisen im hochfrequenten Bereich eine mindestens 10% bessere Schallabsorption und im mittelfrequenten Bereich (Sprachbereich) eine mindestens 5% bessere Schallabsorption auf, als Öffnungen mit im wesentlichen glatten Kanten und glatten Öffnungen, wie sie von Streckmetall-ähnlich geschlitzten Folien bekannt sind.

Das erfindungsgemässe Hitzeschild besteht bevorzugt aus einem einzelnen Metallblatt. Es versteht sich jedoch von selbst, dass dieses auch mehrere Metallblätter umfassen kann. So sind dem Fachmann alle Kombinationen von dem erfindungsgemässen blattförmigen Element mit Metallblättern bekannter Art denkbar. Darüber hinaus können schallabsorbierende Isolationsteile gefertigt werden, welche mindestens ein erfindungsgemässes blattförmiges Element umfassen. Insbesondere können die erfindungsgemässen Blätter mit nicht-genoppten, nichtfissurierten, nicht-verfestigungsgeprägten Folien oder Blechen kombiniert werden. Bevorzugt werden derartige Folien- und/oder Blechpakete gemeinsam zugeschnitten und/oder kaltverschweisst, um ein schallabsorbierendes Isolationsteil, insbesondere ein schallabsorbierendes Hitzeschild für Kraftfahrzeuge zu fertigen.

In einer Weiterbildung des erfindungsgemässen Isolationsteils weist dieses zwei blattförmige Elemente 1 auf und sind im Zwischenraum zwischen diesen beiden Elementen 1 organische und/oder anorganische wärme- und/oder schallisolierende Materialien mit einem Luftströmungswiderstand von 500 bis 5'000 Ns/m³ mindestens partiell angeordnet. Dieser Zwischenraum kann auch von einem mit Fissuren versehenen Blatt und einem geschlossenen Blatt gebildet sein, wobei im Zwischenraum dieser beiden Blätter organische und/oder anorganische wärme- und/oder schallisolierende Materialien mit einem Luftströmungswiderstand von 500 bis 5'000 Ns/m³ mindestens partiell angeordnet sind. Es versteht sich, dass im Zwischenraum von zwei fissurierten Blättern organische und/oder anorganische wärme- und/oder schallisolierende Materialien mit unterschiedlicher Dicke, resp. Dichte und Reihenfolge übereinander angeordnet sind. Dies gilt auch für den Zwischenraum zwischen einem fissurierten Blatt und einem geschlossenen Blatt. Selbstverständlich können die organischen und/oder anorganischen wärme- und/oder schallisolierenden Materialien, insbesondere Vliese, Gewebe, Folien usw., von den einzelnen Blättern beabstandet angeordnet sein. Eine einfache Ausführungsform weist im Zwischenraum zwischen zwei Blättern einen lokal unterschiedlich hohen Luftraum von 1 bis 50 mm auf.

## Patentansprüche

1. Schallabsorbierendes Isolationsteil, insbesondere schallabsorbierendes Hitzeschild für Kraftfahrzeuge, welches Isolationsteil mindestens ein genopptes blattförmiges Element (1) mit Prägungen und Perforationen (2) umfasst, **dadurch gekennzeichnet, dass** die Prägungen Verfestigungsprägungen (8) mit einem Prägeboden (10) und verdichteten Prägeflanken (11) sind und die Perforationen (2) als Fissuren (9) ausgebildet sind, welche eine bizarr geformte Kontur aufweisen und innerhalb des Prägebodens (10) liegen.

2. Isolationsteil nach Anspruch 1, **dadurch gekennzeichnet, dass** das blattförmiger Element (1) mindestens eine Zone (3) ohne Verfestigungsprägungen (8) aufweist.

3. Isolationsteil nach Anspruch 1, **dadurch gekennzeichnet, dass** die Verfestigungsprägungen (8) rund rechteckige, hexagonal, dreiecks-, trapez-, stern- oder sichelförmig sind.

4. Isolationsteil nach Anspruch 1, **dadurch gekennzeichnet, dass** das blattförmige Element (1) mehrere Bereiche umfasst, innerhalb welcher Bereiche die Verfestigungsprägungen (8) eine gleichsinnige Orientierung aufweisen, wobei die Orientierung der Verfestigungsprägungen (8) von mindestens zwei dieser Bereiche unterschiedlich ist.

5. Isolationsteil nach einem der vorhergehenden Ansprüche, **dadurch gekennzeichnet, dass** das Verhältnis von Prägebodendicke (b) zur Dicke (d) des blattförmigen Elementes (1) sich verhält wie b/d ≤ 1/10.

6. Isolationsteil nach einem der vorhergehenden Ansprüche, **dadurch gekennzeichnet, dass** das Verhältnis von Prägebodenbreite (a) zur Prägebodendicke (b) sich verhält wie a/b ≥ 3/1.

7. Isolationsteil nach einem der vorhergehenden Ansprüche, **dadurch gekennzeichnet, dass** das blattförmige Element (1) aus einem metallischen Material besteht.

8. Isolationsteil nach einem der vorhergehenden Ansprüche, **dadurch gekennzeichnet, dass** das blattförmige Element (1) aus Kunststoff, insbesondere einem faserverstärkten Kunststoff, besteht.

9. Isolationsteil nach einem der vorhergehenden Ansprüche, **dadurch gekennzeichnet, dass** das blattförmige Element (1) aus einem Verbundwerkstoff besteht.

10. Isolationsteil nach einem der vorhergehenden Ansprüche, **dadurch gekennzeichnet, dass** das blattförmige Element (1) aus einem geschäumten Material besteht.

11. Isolationsteil nach einem der vorgehenden Ansprüche, **dadurch gekennzeichnet, dass** das blattförmige Element (1) eine Dicke von 0.1 bis 0.5 mm, insbesondere 0.3 bis 0.5 mm, aufweist.

12. Isolationsteil nach einem der vorhergehenden Ansprüche, **dadurch gekennzeichnet, dass** die Fissuren (9) wahllos orientiert im Prägeboden (10) angeordnet sind.

## Claims

1. Sound-absorbing insulation part, in particular sound-absorbing heat shield for motor vehicles, which insulation part comprises at least one studded, sheet-like element (1) with embossments and perforations (2), **characterized in that** the embossments are strengthening embossments (8) with an embossment base (10) and compressed embossment flanks (11), and the perforations (2) are formed as fissures (9) which have a bizarrely-shaped contour and are situated within the embossment base (10).

2. Insulation part according to Claim 1, **characterized in that** the sheet-like element (1) has at least one zone (3) without strengthening embossments (8).

3. Insulation part according to Claim 1, **characterized in that** the strengthening embossments (8) are round, rectangular, hexagonal, triangular, trapezoidal, star-shaped or sickle-shaped.

4. Insulation part according to Claim 1, **characterized in that** the sheet-like element (1) comprises a plurality of regions, within which regions the strengthening embossments (8) are aligned in the same direction, with the alignment of the strengthening embossments (8) of at least two of said regions being different.

5. Insulation part according to one of the preceding claims, **characterized in that** the ratio of embossment base thickness (b) to thickness (d) of the sheet-like element (1) complies with b/d ≤ 1/10.

6. Insulation part according to one of the preceding claims, **characterized in that** the ratio of embossment base width (a) to embossment base thickness (b) complies with a/b ≥ 3/1.

7. Insulation part according to one of the preceding claims, **characterized in that** the sheet-like element (1) is composed of a metallic material.

8. Insulation part according to one of the preceding claims, **characterized in that** the sheet-like element (1) is composed of plastic, in particular a fibre-reinforced plastic.

9. Insulation part according to one of the preceding claims, **characterized in that** the sheet-like element (1) is composed of a composite material.

10. Insulation part according to one of the preceding claims, **characterized in that** the sheet-like element (1) is composed of a foamed material.

11. Insulation part according to one of the preceding claims, **characterized in that** the sheet-like element (1) has a thickness of 0.1 to 0.5 mm, in particular 0.3 to 0.5 mm.

12. Insulation part according to one of the preceding claims, **characterized in that** the fissures (9) are arranged randomly orientated in the embossment base (10).

## Revendications

1. Elément d'isolation absorbant le bruit, en particulier bouclier thermique absorbant le bruit pour véhicules automobiles, le quel élément d'isolation comprenant au moins un élément (1) en forme de feuille grainée d'emboutis et de perforations (2), **caractérisé en ce que**, le embouti est un embouti de solidification (8) qui présente des fonds de empreinte (10) et des flancs comprimés de empreinte (11) et **en ce que** les perforations (2) ont la forme de fissures (9) qui présentent un contour de forme bizarre et sont situées à l'intérieur des fonds d'empreinte (10).

2. Elément isolant selon la revendication 1, **caractérisé en ce que** l'élément (1) en forme de feuille présente au moins une zone (3) sans embouti de solidification (8).

3. Elément isolant selon la revendication 1, **caractérisé en ce que** le embouti de solidification (8) a une forme circulaire, rectangulaire, hexagonale, triangulaire, trapézoïdale, en étoile ou en croissant.

4. Elément isolant selon la revendication 1, **caractérisé en ce que** l'élément (1) en forme de feuille comprend plusieurs parties à l'intérieur desquelles le embouti de solidification (8) est orienté dans une seule direction, l'orientation du embouti de solidification (8) étant différente dans au moins deux de ces parties.

5. Elément isolant selon l'une des revendications précédentes, **caractérisé en ce que** le rapport entre l'épaisseur (b) des fonds de empreinte et l'épaisseur (d) de l'élément (1) en forme de feuille, b/d, est ≤ 1/10.

6. Elément isolant selon l'une des revendications précédentes, **caractérisé en ce que** le rapport entre la largeur (a) des fonds de empreinte et l'épaisseur (b) des fonds de gaufrage, a/b, est ≥ 3/1.

7. Elément isolant selon l'une des revendications précédentes, **caractérisé en ce que** l'élément (1) en forme de feuille est constitué d'un matériau métallique.

8. Elément isolant selon l'une des revendications précédentes, **caractérisé en ce que** l'élément (1) en forme de feuille est constitué de matière synthétique et en particulier de matière synthétique renforcée de fibres.

9. Elément isolant selon l'une des revendications précédentes, **caractérisé en ce que** l'élément (1) en forme de feuille est constitué d'un matériau composite.

10. Elément isolant selon l'une des revendications précédentes, **caractérisé en ce que** l'élément (1) en forme de feuille est constitué d'un matériau en mousse.

11. Elément isolant selon l'une des revendications précédentes, **caractérisé en ce que** l'élément (1) en forme de feuille a une épaisseur de 0,1 à 0,5 mm et en particulier de 0,3 à 0,5 mm.

12. Elément isolant selon l'une des revendications précédentes, **caractérisé en ce que** les fissures (9) sont orientées de manière aléatoire dans les fonds de l'empreinte (10).
